# EUROPÄISCHE PATENTANMELDUNG

(11) **EP 0 885 669 A2**
(43) Veröffentlichungstag der Anmeldung: **23.12.1998**
(21) Anmeldenummer: 98108395.9
(22) Anmeldetag: 08.05.1998
(51) Int. Cl.: B21D 35/00

(54) **Verfahren zur Herstellung von Hülsen mit Muttergewindesegmenten und derart gefertigte Hülse**

(30) Priorität: 16.06.1997 DE 19725359
(71) Anmelder: ABB PATENT GmbH, 68309 Mannheim (DE)
(72) Erfinder: Böhm, Hans, 69214 Eppelheim (DE)
(74) Vertreter: Rupprecht, Klaus, Dipl.-Ing.

(57) **Zusammenfassung**

Es wird ein Verfahren zur Herstellung von Hülsen mit Muttergewindesegmenten vorgeschlagen, bei dem in eine Hülse ein Gewindeprägedorn (9) mit einer axialen Längsbewegung eingeführt wird, welcher längs seines Umfanges Gewindegangsegmente (14 a bis 14d) aufweist. Stempel (11a bis 11d) drücken gegen den Außenmantel der Hülse, so daß die Rohrwand (6) zwischen den Gewindegangsegmenten des Gewindeprägedorns (9) und den Stempeln zu Muttergewindesegmenten (8a bis 8d) verformt wird. Der Gewindeprägedorn wird mit einer geringen Drehbewegung und einer anschließenden axialen Längsbewegung aus der Hülse entfernt. Die Hülse ist mit mindestens zwei Muttergewindesegmenten (8a bis 8d) und mindestens zwei Einprägungen (12a bis 12d) in der Rohrwand (6) versehen, wobei sich die Einprägungen jeweils exakt gegenüber den Muttergewindesegmenten am Außenmantel der Hülse befinden.

## Beschreibung

Die Erfindung bezieht sich auf ein Verfahren zur Herstellung von Hülsen mit Muttergewindesegmenten gemäß dem Oberbegriff der nebengeordneten Ansprüche 1 und 2 sowie auf eine derart gefertigte Hülse. Ein Anwendung ist auf dem Gebiet der Niederspannungs-Sicherungsautomaten gegeben. Dort können die für den elektrischen Anschluß von Stromleitungen, Stromkabeln und Verteilerschienen erforderlichen Hülsen mit Muttergewinde nach dem vorgeschlagenen Verfahren gefertigt werden.

Bei allgemein bekannten Fertigungsverfahren zur Herstellung von Muttergewinden wird der Gewindegang durch Eindrehen und Ausdrehen von Gewindebohrern oder Gewindeformern in Bohrungen gefertigt. Die Gewindewandung darf bei diesen Fertigungsverfahren keine Ausschnitte (Fenster) aufweisen, da beispielsweise in derartige Ausschnitte eindringende Späne die Fertigungsqualität des Gewindes herabsetzen. Durch Ausschnitte in der Rohrwandung geht zudem die für die Werkzeuge beim Gewindeschneiden oder Gewindeformen notwendige Zentrierung verloren, was ebenfalls die Qualität des Gewindes negativ beeinträchtigt. Des weiteren sind diese Fertigungsverfahren auf Grund des notwendigen Ein- und Ausdrehens des Gewindebohrers bzw. Gewindeformers relativ zeitaufwendig.

Der Erfindung liegt die Aufgabe zugrunde, ein einfaches und schnelles Verfahren zur Herstellung von Hülsen mit Muttergewindesegmenten anzugeben. Des weiteren soll eine derart gefertigte Hülse angegeben werden, deren Rohrwand auch mit Ausschnitten versehen sein kann.

Diese Aufgabe wird alternativ hinsichtlich des Verfahrens zur Herstellung von Hülsen mit Muttergewindesegmenten in Verbindung mit den Merkmalen des Oberbegriffes erfindungsgemäß durch die im Kennzeichen der Ansprüche 1 und 2 angegebenen Merkmale gelöst. Die Aufgabe wird hinsichtlich der Hülse durch eine Hülse mit mindestens zwei Muttergewindesegmenten und mindestens zwei Einprägungen in der Rohrwand gelöst, wobei sich die Einprägungen jeweils exakt gegenüber den Muttergewindesegmenten am Außenmantel der Hülse befinden.

Die mit der Erfindung erzielbaren Vorteile bestehen insbesondere darin, daß die vorgeschlagenen Hülsen sehr preiswert hergestellt werden können. Die Hülsen können mit beliebigen Ausschnitten in der Rohrwand versehen sein. Die Fertigung der Hülsen erfolgt sehr schnell, da insbesondere die Einbringung der Muttergewindesegmente wesentlich rascher - bis zu zehnfach schneller - als mit bislang üblichen Techniken erfolgt. Bei Verwendung eines galvanisierten Metallbandes zur Herstellung der Hülsen bleibt die Galvanisierungsschicht auch in den Gewindegängen des Muttergewindes vollständig erhalten. Ein zusätzlicher Galvanisierungsprozeß nach Einbringung der Gewinde mit seinen Nachteilen, wie Entfetten, Reinigen, ist nicht erforderlich.

Die Muttergewindesegmente werden gezielt nur dort in der Hülse vorgesehen, wo sie erforderlich und notwendig sind. Das Fertigungsverfahren zwingt nicht dazu, auch dort Gewindegänge einzubringen, wo sie nicht erforderlich sind und störend wirken, beispielsweise in unmittelbarer Nähe von Ausschnitten.

Die Erfindung wird nachstehend anhand der in der Zeichnung dargestellten Ausführungsbeispiele erläutert. Es zeigen:
- Fig. 1: eine schematische Übersicht zum Verfahren zur Herstellung einer Hülse mit Muttergewindesegmenten,
- Fig. 2: eine perspektivische Ansicht einer Hülse mit Muttergewinde,
- Fig. 3: eine Skizze zur Verdeutlichung des vierten Verfahrensschritts,
- Fig. 4: eine Skizze zum fünften Verfahrensschritt.

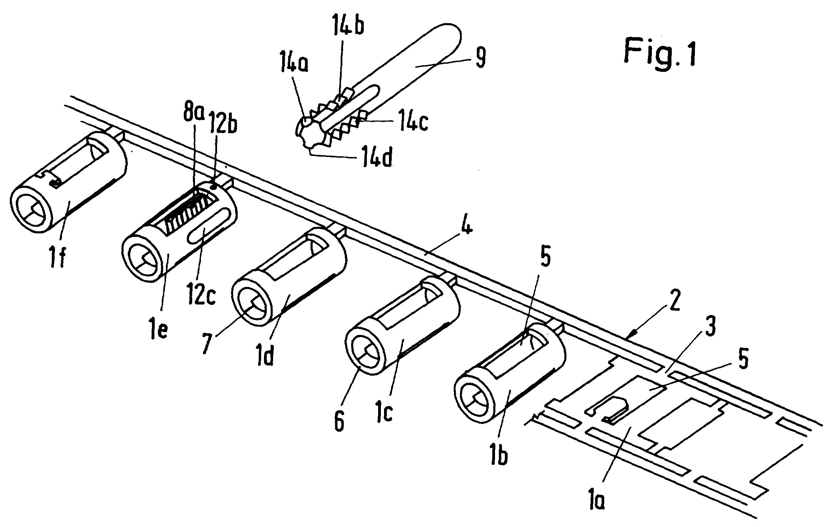

In Fig. 1 ist eine schematische Übersicht zum Verfahren zur Herstellung einer Hülse mit Muttergewindesegmenten dargestellt. Es ist ein vorzugsweise galvanisiertes Metallband 2 zu erkennen, das eine Vielzahl nacheinander angeordneter gestanzter Bandstreifen 1a aufweist, welche über Randstege 3 mit durchgehenden Randabschnitten 4 des Metallbandes verbunden sind. Die gestanzter Bandstreifen 1a sind jeweils mit Ausschnitten (Fenster) 5 versehen. Bei Einsatz der gefertigten Hülsen auf dem Gebiet der Niederspannungs-Sicherungsautomaten dienen diese Ausschnitte zur Einführung von Stromleitungen, Stromkabeln oder Verteilerschienen.

In einem ersten Schritt wird jeder Bandstreifen 1a mittels eines geeigneten Werkzeuges zu einer Hülse 1b gebogen. Dabei sind die Hülsen 1b noch über die Randstege 3 mit dem Randabschnitt 4 des Metallbandes verbunden, so daß der Transport der nebeneinander liegenden einzelnen Hülsen in einfacher Weise über den Randabschnitt erfolgen kann. Die Rohrwände 6 der Hülsen sind bezeichnet.

In einem zweiten Schritt erfolgt die Kalibrierung der Innen- und Außendurchmesser der Hülsen 1b mittels geeigneter Werkzeuge (Dorne) und es entstehen hierdurch kalibrierte Hülsen 1c.

Gemäß einem dritten Schritt erfolgt das Verschweißen der Verbindungsstellen der Rohrwände 6 und es entstehen hierdurch verschweißte Hülsen 1d. Die gebildeten Schweißnähte 7 sind bezeichnet. Dieser Schritt ist nicht zwingend erforderlich und kann insbesondere dann entfallen, wenn der Einsatz der Hülsen beispielsweise innerhalb eines den Außenmantel der Hülsen stützenden Rohres oder einer zylinderförmigen Ausnehmung geplant ist, wodurch eine Aufweitung der Hülsen unterbunden wird.

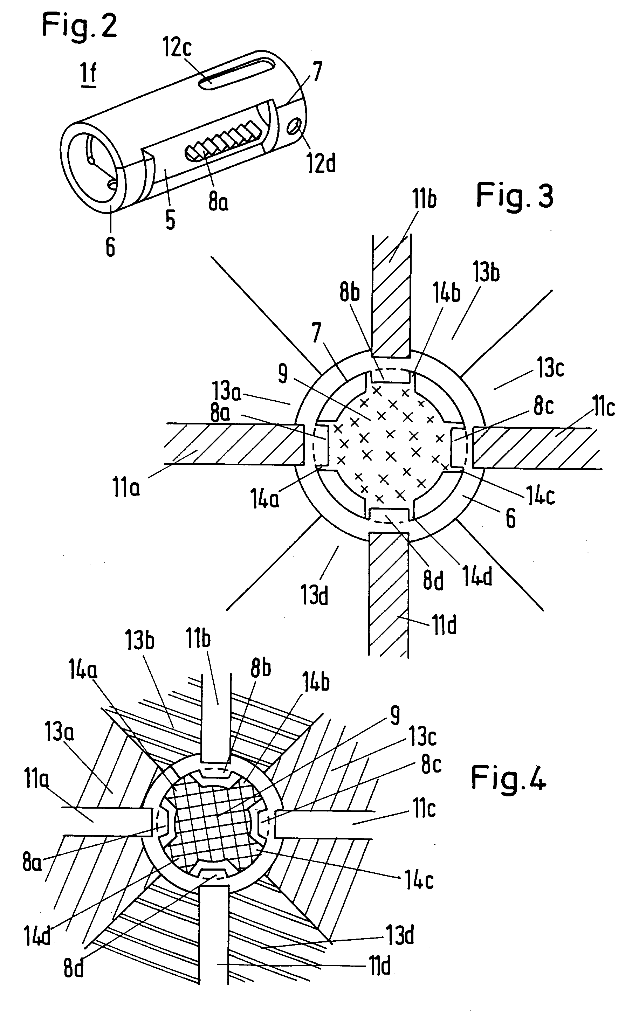

In einem vierten Schritt werden Muttergewindesegmente 8a, 8b, 8c, 8d in die Hülse 1c oder 1d eingebracht (siehe hierzu auch die Fig. 3 und 4). Hierzu wird die Hülse zunächst mittels vier gegen den Außenmantel pressenden Spannbacken 13a, 13b, 13c, 13d vorgespannt. Anschließend gleitet ein Gewindeprägedorn 9 axial in die Hülse 1c oder 1d ein. Der Durchmesser des Gewindeprägedorns 9 entspricht dem Innendurchmesser der Hülse. Der Gewindeprägedorn 9 weist längs seines Umfanges Gewindegangsegmente 14a, 14b, 14c, 14d auf.

Zur Einprägung der Muttergewindesegmente drücken Stempel 11a, 11b, 11c, 11d gegen den Außenmantel der Hülse, und zwar exakt gegenüber den Gewindegangsegmenten 14a, 14b, 14c, 14d, so daß die Rohrwand 6 zwischen den Gewindegangsegmenten des Gewindeprägedorns 9 und den Stempeln 11a, 11b, 11c, 11d zu den Muttergewindesegmenten 8a, 8b, 8c, 8d des Muttergewindes verformt wird. Derart entstehen mit Muttergewinde versehene Hülsen 1e. Die durch die Stempel 11b, 11c rührenden Einprägungen 12b, 12c am Außenmantel der Hülse sind in der Fig. 1 bezeichnet. Bei Einsatz der gefertigten Hülsen auf dem Gebiet der Niederspannungs-Sicherungsautomaten dienen die durch die Muttergewindesegmente gebildeten Muttergewinde zur Einführung von Schrauben, welche zur elektrischen Kontaktierung die in die Ausschnitte gesteckten Stromleitungen, Stromkabel oder Verteilerschienen beispielsweise gegen ein Kontaktstück pressen.

In einem fünften Schritt wird der Gewindeprägedorn 9 aus der Hülse entfernt. Hierzu ist lediglich eine geringe Drehbewegung um ungefähr 45° und eine anschließende axiale Längsbewegung des Gewindeprägedorns 9 aus der Hülse heraus erforderlich.

In einem sechsten Schritt werden die Randstege 3 durchbrochen, so daß die abgetrennten Hülsen 1f entnommen werden können. Des weiteren ist eine weitere Bearbeitung 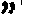 in der Linie" möglich.

Eine alternative Fertigungstechnik eignet sich zur Herstellung von Hülsen mit Muttergewindesegmenten, wobei am Schluß der Fertigung der Hülsen Schrauben in die Mutttergewinde eingreifen sollen. Bei dieser Fertigungstechnik besteht allerdings die Vorbedingung, daß die Länge eines Muttergewindesegmentes maximal der Länge der Schraube entspricht. Die ersten drei Schritte bei der Fertigung sind dabei den vorstehend erläuterten Schritten gleichartig.

In einem vierten Schritt wird jedoch nicht ein Gewindeprägedorn 9 in die Hülse eingeführt, sondern statt dessen eine hochfeste Schraube. Der Durchmesser der Schraube entspricht dem Innendurchmesser der Hülse. Zur Einprägung der Muttergewindesegmente drücken die Stempel gegen den Außenmantel der Hülse, so daß die Rohrwand zwischen Schraube und den Stempeln zu den Muttergewindesegmenten verformt wird.

Der fünfte Schritt entfällt bei dieser alternativen Fertigungsmethode, so daß sich unmittelbar der vorstehend erläuterte sechste Schritt anschließen kann.

In Fig. 2 ist eine nach dem vorstehend unter Fig. 1 erläuterten Verfahren hergestellte Hülse dargestellt. Die Hülse 1f weist vier Muttergewindesegmente 8a, 8b, 8c, 8d auf. Es ist lediglich das Muttergewindesegment 8a durch den Ausschnitt 5 der Hülse zu erkennen, da die weiteren Muttergewindesegmente durch die Rohrwand 6 verdeckt sind. Die Einprägungen 12c, 12d der verdeckten Muttergewindesegmente am Außenmantel der Hülse sind zu erkennen. Die Schweißnaht 7 der Verbindungsstellen der Hülse ist angegeben.

Fig. 3 zeigt eine Skizze zum vierten Verfahrensschritt, dem Herstellen der Muttergewindesegmente 8a, 8b, 8c, 8d. Die Figuren 3 und 4 zeigen Schnitte durch die Hülse mit den am Formprozeß beteiligten Werkzeugen, wobei der Blick von der Stirnseite her erfolgt. Die Spannbacken 13a, 13b, 13c, 13d pressen gegen die Rohrwand 6 der Hülse. In den Spannbacken werden die Stempel 11a, 11b, 11c, 11d geführt, welche die Wandung der Hülse gegen die Gewindegangsegmente 14a, 14b, 14c, 14d des Gewindeprägedorns 9 pressen. Durch diesen Formvorgang werden die Muttergewindesegmente 8a, 8b, 8c, 8d der Hülse gebildet.

Fig. 4 zeigt eine Skizze zum fünften Verfahrensschritt, dem Entfernen des Gewindeprägedorns 9 aus der Hülse. Wie zu erkennen, ist der Gewindeprägedorn 9 im Vergleich zu seiner Position gemäß Fig. 3 um 45° nach rechts gedreht, so daß die Gewindegangsegmente 14a, 14b, 14c, 14d aus den gefertigten Muttergewindesegmenten 8a, 8b, 8c, 8d entfernt sind. Durch eine axiale Längsbewegung wird der Gewindeprägedorn aus der Hülse gezogen.

In Fig. 4 sind zusätzlich zur verbesserten Darstellung die am Formprozeß beteiligten Werkzeuge, wie Spannbacken 13a bis 13d und Gewindeprägedorn 9 schraffiert.

Bei der vorstehend erläuterten Ausführungsform sind beispielhaft vier Muttergewindesegmente vorgesehen. Es können jedoch selbstverständlich auch Varianten mit mehr als vier und Varianten mit weniger als vier Muttergewindesegmenten gefertigt werden. Die einfachste Variante weist zwei sich um 180° gegenüberliegende Muttergewindesegmente auf.

## Patentansprüche

1. Verfahren zur Herstellung von Hülsen mit Muttergewindesegmenten, dadurch gekennzeichnet, daß in eine Hülse ein Gewindeprägedorn (9) mit einer axialen Längsbewegung eingeführt wird, welcher längs seines Umfanges Gewindegangsegmente (14 a bis 14d) aufweist, wobei der Durchmesser des Gewindeprägedorns dem Innendurchmesser der Hülse entspricht, daß Stempel (11a bis 11d) gegen den Außenmantel der Hülse drücken, so daß die Rohrwand (6) zwischen den Gewindegangsegmenten des Gewindeprägedorns (9) und den Stempeln zu Muttergewindesegmenten (8a bis 8d) verformt wird und daß der Gewindeprägedorn mit einer geringen Drehbewegung und einer anschließenden axialen Längsbewegung aus der Hülse entfernt wird.

2. Verfahren zur Herstellung von Hülsen mit Muttergewindesegmenten, dadurch gekennzeichnet, daß in eine Hülse eine hochfeste Schraube mit einer axialen Längsbewegung eingeführt wird, wobei der Durchmesser der Schraube dem Innendurchmesser der Hülse entspricht, daß Stempel (11a bis 11d) segmentweise gegen den Außenmantel der Hülse drücken, so daß die Rohrwand (6) zwischen Schraube und Stempeln zu Muttergewindesegmenten (8a bis 8d) verformt wird.

3. Verfahren nach Anspruch 1 oder 2, dadurch gekennzeichnet, daß die Hülsen vor der Gewindefertigung hinsichtlich ihres Außen- und/oder Innendurchmessers kalibriert werden.

4. Verfahren nach einem der vorstehenden Ansprüche, dadurch gekennzeichnet, daß die Verbindungsstellen der Hülsen vor der Gewindefertigung verschweißt werden.

5. Verfahren nach einem der vorstehenden Ansprüche, dadurch gekennzeichnet, daß die Hülsen durch Spannbacken (13a bis 13d) vorgespannt werden.

6. Hülse mit mindestens zwei Muttergewindesegmenten (8a bis 8d) und mindestens zwei Einprägungen (12a bis 12d) in der Rohrwand (6), wobei sich die Einprägungen jeweils exakt gegenüber den Muttergewindesegmenten am Außenmantel der Hülse befinden.
